# EUROPÄISCHE PATENTSCHRIFT

(11) **EP 2 247 496 B1**
(45) Veröffentlichungstag und Bekanntmachung des Hinweises auf die Patenterteilung: **09.07.2014**
(21) Anmeldenummer: 09716463.6
(22) Anmeldetag: 03.02.2009
(51) Int. Cl.: B64C 1/06, B64C 1/12

(54) **VERBUND SOWIE LUFT- ODER RAUMFAHRZEUG MIT EINEM DERARTIGEN VERBUND**
INTERCONNECTION AND AIRCRAFT OR SPACECRAFT HAVING SUCH AN INTERCONNECTION
LIAISON AINSI QUE VÉHICULE AÉRONAUTIQUE ET AÉROSPATIAL COMPORTANT UNE TELLE LIAISON

(30) Priorität: 03.03.2008 DE 102008012252; 03.03.2008 US 67922
(43) Veröffentlichungstag der Anmeldung: 10.11.2010
(73) Patentinhaber: Airbus Operations GmbH, 21129 Hamburg (DE)
(72) Erfinder: TACKE, Stefan, 21614 Buxtehude (DE); STUEBS, Andre, 22455 Hamburg (DE)
(74) Vertreter: Isarpatent
(86) Internationale Anmeldenummer: PCT/EP2009/051193
(87) Internationale Veröffentlichungsnummer: WO 2009/109438

(56) Entgegenhaltungen:
- WO-A-98/58759
- FR-A- 2 922 516
- US-A1- 2006 060 705

## Beschreibung

Die vorliegende Erfindung bezieht sich auf einen Verbund, insbesondere im Luft- und Raumfahrtbereich sowie auf ein Luft- oder Raumfahrzeug mit einem derartigen Verbund.

Bei der Herstellung von Schalen für den Flugzeugbau sind T- und Ω-Stringer heutzutage unabdingbar. Aufgrund der statischen Lastanforderungen und dem Bestreben, die Strukturen möglichst leicht und wartungsgerecht zu konstruieren, ist es in gewissen Bereichen erforderlich, T- und Q-Stringer aneinander zu befestigen. Hierfür gibt es derzeit keine geeigneten Lösungen.

Druckschrift US 2006/0060705, die als nächsliegender Stand der Technik betrachtet wird, A1 offenbart Strukturen und Verfahren zum Verbinden von Verbund-Rumpfsektionen eines Flugzeugs. Zur Verbindung von Hautabschnitten ("panels") umfassen angrenzende Hautabschnitte jeweils Versteifungselemente, welche mit Hilfe eines Befestigungselements miteinander verbunden werden, um angrenzende Hautabschnitte miteinander zu fixieren.

Aufgabe der vorliegenden Erfindung ist es daher, einen Verbund bestehend aus wenigstens einem Ω-Stringer, einem T-Stringer und einem Stützwinkel zu schaffen, welcher eine Kopplung eines Ω-Stringers mit einem T-Stringer vorsieht und dabei vergleichsweise unempfindlich gegenüber Toleranzen hinsichtlich der Ausrichtung des Ω-Stringers bezüglich des T-Stringers ist.

Diese Aufgabe wird durch einen Verbund mit den Merkmalen des Patentanspruchs 1 und/oder durch ein Luft- oder Raumfahrzeug mit den Merkmalen des Patentanspruchs 7 gelöst.

Demgemäß wird ein Verbund, insbesondere im Luft- und Raumfahrtbereich, bereitgestellt, welcher einen T-Stringer, einen Ω-Stringer und eine Verbindungsanordnung bzw. Stützwinkel aufweist. Der T-Stringer weist einen Stegabschnitt sowie zwei Fußabschnitte auf, welche sich winklig an ein Ende des Stegabschnitts anschließen und in etwa entgegengesetzt zueinander ausgerichtet sind. Der Ω-Stringer weist einen Kammabschnitt sowie zwei Fußabschnitte auf, welche an gegenüberliegenden Enden des Kammabschnitts anschließen und im Wesentlichen entgegengesetzt zueinander ausgerichtet sind. Die Verbindungsanordnung verbindet die Fußabschnitte des T-Stringers und des Q-Stringers.

Ferner wird ein Luft- und Raumfahrzeug mit dem erfindungsgemäßen Verbund bereitgestellt.

Die der vorliegenden Erfindung zugrundeliegende Idee besteht darin, lediglich die Fußabschnitte der T- und Ω-Stringer miteinander zu koppeln. Dies ist erheblich einfacher als beispielsweise den Stegabschnitt des T-Stringers und den Kammabschnitt des Ω-Stringers miteinander zu koppeln: Eine Kopplung des Stegabschnitts des T-Stringers und des Kammabschnitts des Q-Stringers würde erfordern, dass die Verbindungsanordnung an die vergleichsweise komplexe geometrischen Form des Kammabschnitts des Ω-Stringers angepasst werden müsste.

Ferner ist erfindungsgemäß eine genaue Passung zwischen der Verbindungsanordnung und den Fußabschnitten des T-Stringers beziehungsweise Q-Stringers nicht erforderlich, das heißt, die Verbindungsanordnung kann bezüglich des T- und Q-Stringers flexibel positioniert und anschließend mit diesen verbunden, beispielsweise verklebt und/oder vernietet, werden und somit für einen Toleranzausgleich zwischen dem T-Stringer und dem Q-Stringer sorgen. Dies ist insbesondere beim Zusammenbau von RumpfSektionen, wobei eine erste Rumpfsektion einen ersten Hautabschnitt mit dem T-Stringer und eine zweite Rumpfsektion einen zweiten Hautabschnitt mit dem Ω-Stringer aufweist, wobei die Verbindungsanordnung den T-Stringer mit dem Ω-Stringer, verbindet, von Vorteil.

Aus den Unteransprüchen ergeben sich vorteilhafte Weiterbildungen der Erfindung.

Unter "Ω-Stringer" soll vorzugsweise auch ein A-Stringer subsumiert sein.

Erfindungsgemäß verbindet die Verbindungsanordnung den T-Stringer und den Ω-Stringer in Längsrichtung derselben miteinander. Damit ergibt sich ein günstiger Kraftfluss in dem Verbund.

Erfindungsgemäß weist die Verbindungsanordnung einen Fußabschnitt, welcher die Fußabschnitte des T-Stringers und des Q-Stringers miteinander verbindet, und einen Stegabschnitt auf, welcher im Wesentlichen senkrecht zu dem Fußabschnitt ausgerichtet ist. Somit trägt die Verbindungsanordnung auch wesentlich zur Steifigkeit des Verbunds bei.

Erfindungsgemäß weist der Steg der Verbindungsanordnung an seinem einen Ende oder an seinen beiden Enden Abschrägungen auf, welche zu den Fußabschnitten des T-Stringers beziehungsweise des Ω-Stringers hin auslaufen. Damit ergibt sich keine wesentliche oder eine lediglich graduierliche Steifigkeitsänderung im Bereich Verbindungsanordnung, das heißt ein Steifigkeitssprung wird vermieden. Die Abschrägungen sind vorzugsweise derart angeordnet, dass ein Kraftfluss, welcher beispielsweise von dem Ω-Stringer durch die Verbindungsanordnung und wiederum in den T-Stringer hinein verläuft, eine durchwegs konstante Steifigkeit "sieht". Mit "Steifigkeit" ist vorliegend vorzugsweise die Steifigkeit um eine Achse gemeint ist, welche in einer Ebene parallel zu den Fußabschnitten liegt und im Wesentlichen senkrecht auf dem Stegabschnitt des T-Stringers beziehungsweise dem Kammabschnitt des Q- Stringers steht, gemeint. Dies führt zu einem günstigen Verformungsverhalten, zu günstigen Festigkeitseigenschaften und zu günstigen Ermüdungseigenschaften des Verbunds.

Erfindungsgemäß bildet die Abschrägung mit dem Fußabschnitt einen Winkel von 15 bis 45°. Ein derartiger Winkel ist für einen graduierlichen Steifigkeitsübergang von dem T-Stringer bzw. Q-Stringer auf die Verbindungsanordnung von Vorteil.

Erfindungsgemäß weist der Fußabschnitt der Verbindungsanordnung einen ersten Beschnitt, welcher hin zu dem Stegabschnitt des T-Stringers ausläuft, und/oder einen zweiten Beschnitt auf, welcher von dem Stegabschnitt des T-Stringers weggerichtet ist. Diese Beschnitte verlaufen bevorzugt unter einem Winkel von 15 bis 45° zur Längsrichtung des T-Stringers. Die Vorteile dieser Weiterbildung entsprechen denen, die bereits im Zusammenhang mit den Abschrägungen des Stegabschnitts der Verbindungsanordnung erläutert wurden.

Erfindungsgemäß weist die Verbindungsanordnung ein erstes Verbindungselement und ein zweites Verbindungselement auf, wobei das erste Verbindungselement einen ersten Fußabschnitt des T-Stringers mit einem ersten Fußabschnitt des Q-Stringers und das zweite Verbindungselement einen zweiten Fußabschnitt des T-Stringers mit einem zweiten Fußabschnitt des Ω-Stringers verbindet. Die Verwendung von zwei separaten Verbindungselementen bringt den vorteil mit sich, dass noch flexibler auf Toleranzschwankungen zwischen dem Ω-Stringer und dem T-Stringer bezüglich ihrer Ausrichtung zueinander reagiert werden kann.

Gemäß einer weiter bevorzugten Weiterbildung des erfindungsgemäßen Verbunds weist das erste und/oder zweite Verbindungselement wenigstens abschnittsweise einen U-förmigen und/oder T-förmigen Querschnitt auf. Die Schenkel des Us entsprechen zwei Stegabschnitten der Verbindungsanordnung, während die Basis des Us dem Fußabschnitt der Verbindungsanordnung entspricht. Der Längsbalken des Ts entspricht dem Stegabschnitt der Verbindungsanordnung, während der Querbalken des Ts dem Fußabschnitt der Verbindungsanordnung entspricht. Derartige Verbindungselemente sind einfach herzustellen und weisen eine hohe Steifigkeit auf.

Gemäß einer weiter bevorzugten Weiterbildung des erfindungsgemäßen Verbunds bilden das erste und zweite Verbindungselement einen ersten Aufnahmebereich, in welchem sie den Kammabschnitt des Q-Stringers zwischen sich aufnehmen, und/oder einen zweiten Aufnahmebereich, in welchem sie den Stegabschnitt des T-Stringers zwischen sich aufnehmen. Dabei überlappen sich vorzugsweise die Stegabschnitte des ersten und zweiten Verbindungselements mit dem Kammabschnitt und dem Stegabschnitt des T-Stringers. Dies führt zu einem insgesamt sehr steifen Verbund.

Gemäß einer weiter bevorzugten Weiterbildung des erfindungsgemäßen Verbunds weist der erste Aufnahmeabschnitt einen ersten Stegabschnitt und der zweite Aufnahmeabschnitt einen zweiten Stegabschnitt auf, wobei sich der erste und zweite Stegabschnitt abschnittsweise überlappen. In Querrichtung (also Quer zu der Längsrichtung des T- und Ω-Stringers) ist der Kammabschnitt des Ω-Stringers deutlich breiter ausgebildet als der Stegabschnitt des T-Stringers. Dies erfordert es, dass der erste Stegabschnitt - soweit er gerade ausgebildet ist - bezogen auf die Längsrichtung weiter außen liegt als der zweite Stegabschnitt des zweiten Aufnahmeabschnitts. Um nun einen direkten Steifigkeitsübergang zwischen dem ersten und zweiten Stegabschnitt zu ermöglichen - soweit diese nicht miteinander verbunden sind -, werden diese derart zueinander angeordnet, dass sie sich abschnittsweise überlappen.

Erfindungsgemäß weisen das erste und zweite Verbindungselement zusammen einen im Wesentlichen H-förmigen Umriss auf. Die beiden offenen Enden des Hs bilden dabei den ersten und zweiten Aufnahmebereich für den Stegabschnitt des T-Stringers beziehungsweise den Kammabschnitt des Q- Stringers aus.

Erfindungsgemäß ist der T-Stringer mit einem ersten Hautabschnitt und der Q-Stringer mit einem zweiten Hautabschnitt verbunden, wobei die Verbindungsanordnung den ersten und zweiten Hautabschnitt überbrückt, wobei das erste und zweite Verbindungselement in einem Überbrückungsbereich jeweils einen sich zueinander hin verbreiternden Fußabschnitt aufweisen, welche jeweils mit einem den ersten und zweiten Hautabschnitt überbrückenden Gurt verbunden sind. Auf diese Weise können zwei Hautabschnitte sehr stabil miteinander verbunden werden.

Kennzeichen des erfindungsgemäßen Verbunds ist ein Stützwinkel, insbesondere zur Verbindung eines Spants mit dem Q- und dem T-Stringer, mit den sich verbreiternden Fußabschnitten des ersten und zweiten Verbindungselements verbunden. Damit ergibt sich ein noch stabilerer Verbund, vorzugsweise ist der Stützwinkel mit den Fußabschnitten vernietet und/oder verklebt. Die Nieten erstrecken sich dann vorzugsweise durch den ersten beziehungsweise zweiten Hautabschnitt, durch den Gurt und durch einen der Fußabschnitte.

Gemäß einer weiter bevorzugten Weiterbildung des Luft- oder Raumfahrzeugs ist der erste Hautabschnitt als eine erste Rumpfsektion und der zweite Hautabschnitt als eine zweite Rumpfsektion ausgebildet. Auf diese Weise lassen sich RumpfSektionen miteinander verbinden, wobei ein Q-Stringer der ersten Rumpfsektion mit einem T-Stringer der zweiten Rumpfsektion verbunden werden kann, ohne dass besonders enge Toleranzen bei der Fertigung eingehalten werden müssen.

Der Ω-Stringer, der T-Stringer, die Verbindungsanordnung, der erste Hautabschnitt und/oder zweite Hautabschnitt sind vorzugsweise aus Faserverbundwerkstoff oder einer Aluminiumlegierung gebildet. Als Faserverbundwerkstoff kommt insbesondere CFK (Kohlenstofffaserkunststoff), GFK (Glasfaserkunststoff) und/oder Glare®, jeweils gegebenenfalls mit zusätzlichen Fasern aus anderen Materialien, beispielsweise Aramid, in Frage.

Der erfindungsgemäße Verbund ist besonders geeignet für T- und Q-Stringer, Hautabschnitte und/oder RumpfSektionen aus Faserverbundwerkstoff, da sich diese weniger genau fertigen lassen, als solche aus einer Aluminiumlegierung und daher ein Toleranzausgleich zwischen dem Q- und dem T-Stringer eher benötigt wird.

Die Erfindung wird im Folgenden anhand von Ausführungsbeispielen unter Bezugnahme auf die beiliegenden Figuren näher erläutert.

Von den Figuren zeigen:
- Fig. 1: in einer perspektivischen Ansicht einen Verbund gemäß einem Ausführungsbeispiel der vorliegenden Erfindung, wobei ein Ω-Stringer direkt mit einem T- Stringer gekoppelt ist;
- Fig. 2: in einer perspektivischen Ansicht einen Verbund gemäß einem weiteren Ausführungsbeispiel der vorliegenden Erfindung, wobei ein Ω-Stringer mit einem T- Stringer über einen Querstoß hinweg gekoppelt ist;
- Fig. 3: in einer perspektivischen Ansicht den Verbund aus Fig. 2 mit einem Spant und Stützwinkeln;
- Fig. 4: in einer perspektivischen Ansicht einen Verbund gemäß einem weiteren Ausführungsbeispiel der vorliegenden Erfindung, wobei ein Q-Stringer direkt mit einem T-Stringer gekoppelt ist;
- Fig. 5: in einer perspektivischen Ansicht einen Verbund gemäß einem weiteren Ausführungsbeispiel der vorliegenden Erfindung, wobei ein Ω-Stringer über einen Querstoß hinweg mit einem T-Stringer gekoppelt ist; und
- Fig. 6: in einer perspektivischen Ansicht den Verbund aus Fig. 5, wobei Stützwinkel vorgesehen sind.

In den Figuren sind gleiche oder funktionsgleiche Komponenten mit den gleichen Bezugszeichen versehen, soweit nichts Gegenteiliges angegeben ist.

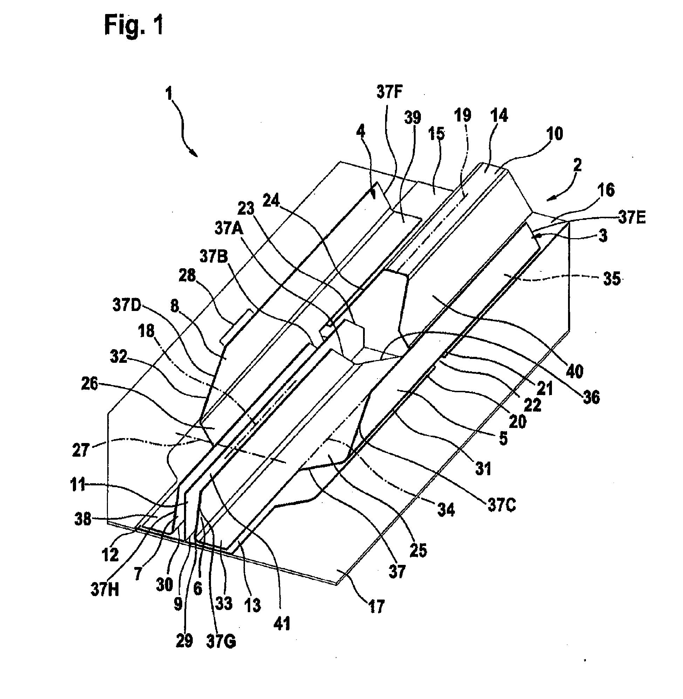

Im Zusammenhang mit den Figuren 1 bis 3 wird nachfolgend ein Verbund 1 mit einer Verbindungsanordnung 2, deren Verbindungselemente 3 und 4 mit jeweils zwei Stegabschnitten 5, 6 , beziehungsweise 7, 8 ausgebildet sind, näher erläutert.

Fig. 1 zeigt in einer perspektivischen Ansicht, den Verbund 1 gemäß einem bevorzugten Ausführungsbeispiel der Erfindung, wobei ein T-Stringer 9 direkt mit einem Ω-Stringer 10 mittels der Verbindungsanordnung 2 gekoppelt ist.

Der T-Stringer 9 weist einen Stegabschnitt 11 sowie Fußabschnitte 12, 13 auf, die sich an ein Ende des Stegabschnitts 11 winklig anschließen und im Wesentlichen entgegengesetzt zueinander ausgerichtet sind. Der Ω-Stringer 10 weist einen Kammabschnitt 14 sowie zwei Fußabschnitte 15, 16 auf, die sich an gegenüberliegende Enden des Kammabschnitts 14 anschließen und im Wesentlichen entgegengesetzt zueinander ausgerichtet sind. Der T-Stringer 9 und der Ω-Stringer 10 sind jeweils an ihren Fußabschnitten 12, 13 beziehungsweise 15, 16 mit einem Hautabschnitt 17 verbunden. Dies kann beispielsweise mittels Nieten oder Klebstoff bewerkstelligt sein.

Die Verbindungsanordnung 2 verbindet den T-Stringer 9 und den Ω-Stringer 10 entlang ihrer jeweiligen Längsrichtungen 18 beziehungsweise 19 miteinander, das heißt, die Längsrichtungen 18, 19 sind im Wesentlichen hintereinander und koaxial zueinander ausgerichtet (vorliegend entsprechen die Längsrichtungen 18 und 19 den Symmetrieachsen des T-Stringers 9 beziehungsweise des Ω-Stringers 10 in einer Obenansicht derselben).

Enden 20 und 21 des T- beziehungsweise Ω-Stringers 9, 10 bilden einen Spalt 22 zwischen sich aus. Bei dem Ausführungsbeispiel gemäß Fig. 1 beträgt die Breite des Spalts 22 nur wenige Millimeter. In dem Bereich der Enden 20 und 21 sind die Fußabschnitte 12, 13 beziehungsweise 15, 16 des T-Stringers 9 beziehungsweise des Q-Stringers 10 jeweils quer zur Längsrichtung 18, 19 verbreitert ausgebildet. Der Stegabschnitt 11 und der Kammabschnitt 14 des T- beziehungsweise Q-Stringers 9, 10 sind im Bereich der Enden 20 beziehungsweise 21 jeweils mit einer Schräge 23 beziehungsweise 24 ausgebildet. Die 20 Schrägen 23 und 24 laufen jeweils zu den Enden 20 beziehungsweise 21 des T-Stringers 9 beziehungsweise Ω-Stringers 10 hin aus.

Jedes der Verbindungselemente 3 und 4 weist einen Fußabschnitt 25 beziehungsweise 26 auf, an welchen sich die Stegabschnitte 5, 6 beziehungsweise 7, 8 winklig anschließen. Der Winkel beträgt dabei vorzugsweise 90°, kann aber auch beispielsweise zwischen 45 und 90° liegen.

Die Stegabschnitte 5 und 6 des Verbindungselements 3 wie auch die Stegabschnitte 7 und 8 des Verbindungselements 4 sind in der Querrichtung 27 (also quer zu der Längsrichtung 18 und Längsrichtung 19 des T-Stringers 9 beziehungsweise Q- Stringers 10) versetzt zueinander angeordnet. Vorzugsweise überlappen sich die Stegabschnitte 5 und 6 beziehungsweise 7 und 8 entlang der Querrichtung 27 gesehen über einen Abschnitt 28 hinweg. Ein Querschnitt im Bereich des Überlappungsabschnitts 28 durch das Verbindungseiement 3 oder 4 weist die Gestalt eines Us auf, wobei die Schenkel des Us durch die Stegabschnitte 5, 6 beziehungsweise 7, 8 und die Basis des Us durch den Fußabschnitt 25 beziehungsweise 26 gebildet wird. Die Stegabschnitte 5 bis 8 erstrecken sich vorzugsweise im Wesentlichen parallel zueinander. Die Stegabschnitte 6, 7 des Verbindungselements 3 beziehungsweise 4 sind jeweils an der dem Stegabschnitt 11 des T-Stringers 9 zugewandten Kante 29, 30 des Fußabschnitts 25 beziehungsweise 26 angeformt, während die Stegabschnitte 5, 8 des Verbindungselements 3 beziehungsweise 4 an der von dem Stegabschnitt 11 des Stringers 9 abgewandten Kante 31 beziehungsweise 32 angeformt sind.

Jeder der Fußabschnitte 25, 26 setzt sich aus einem ersten Abschnitt 33 und einem zweiten Abschnitt 35 zusammen (beispielhaft für den Fußabschnitt 25 erläutert). Die Abschnitte 33 und 35 weisen einen im Wesentlichen rechtwinkligen Querschnitt auf und erstrecken sich im Wesentlichen in Querrichtung 27 zueinander versetzt und Längsrichtung 18, 19 parallel zueinander. Der Abschnitt 33 ist mit dem Abschnitt 35 entlang einer gedachten, gestrichelt dargestellten Grenzlinie 34 verbunden. Die Abschnitte 33 und 35 sind jeweils an ihren Enden, mit welchen sie aneinander angrenzen, mit einem geraden oder 25 geschwungenen Beschnitt 36 beziehungsweise 37 versehen, welcher sich vorzugsweise unter einem Winkel von etwa 45° zur Querrichtung 27 erstreckt. Den Abschnitten 33 und 35 des Verbindungselements 3 entsprechen Abschnitte 38 bzw. 39 des Verbindungselements 4.

Die Abschnitte 35 und 39 der Verbindungselemente 3 bzw. 4 bilden vorzugsweise einen Aufnahmebereich 40 zwischen sich aus, in welchem der Kammabschnitt 14 des Ω-Stringers 10 angeordnet ist. Die Abschnitte 35 und 39 sind in einem ersten Bereich, in dem sie die Fußabschnitte 15 und 16 des Ω-Stringers 10 überlappen, mit diesen und in einem zweiten Bereich, in dem sie die Fußabschnitte 12, 13 des T-Stringers 9 überlappen, mit jenen beispielsweise mittels Klebstoff oder Nieten verbunden. Die Abschnitte 33 und 38 des Verbindungselements 3 bzw. 4 bilden einen Aufnahmebereich 41 zwischen sich aus, in welchem der Steg 11 des T-Stringers 9 angeordnet ist. Die Abschnitte 33 und 38 der Verbindungselemente 3 und 4 liegen jeweils vorzugsweise vollflächig auf den Fußabschnitten 12 beziehungsweise 13 des T-Stringers 9 auf und sind mit diesen beispielsweise mittels Klebstoff und/oder Nieten verbunden.

Die Stegabschnitte 6 und 7 der Verbindungselemente 3 und 4 weisen Abschrägungen 37A beziehungsweise 37B auf, welche zu dem Q-Stringer 10 hin unter einem Winkel von in etwa 15 bis 45° auslaufen. Die Stegabschnitte 5 und 8 des Verbindungselements 3 beziehungsweise 4 weisen ebenfalls Abschrägungen 37C, 15 3 7D auf, welche in einer Richtung weg von dem Ω-Stringer 10 unter einem Winkel von in etwa 15 bis 45° auslaufen. Die Stegabschnitte 5 und 8 sind vorzugsweise weiterhin mit Abschrägungen 37E und 37F versehen, welche in eine Richtung weg von dem T-Stringer 9 hin auslaufen. Vorzugsweise sind die Stegabschnitte 6 und 7 des Verbindungselements 3 beziehungsweise 4 ebenfalls mit Abschrägungen 37G und 37H versehen, welche in einer Richtung weg von dem Q-Stringer 10 auslaufen.

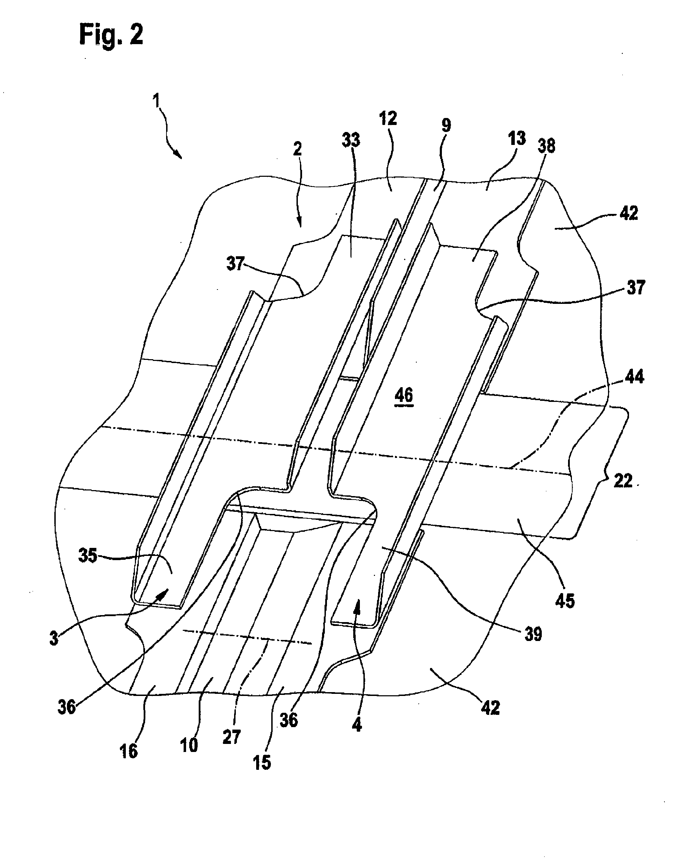

Fig. 2 zeigt in einer perspektivischen Ansicht einen Verbund gemäß einem weiteren Ausführungsbeispiel der Erfindung, im Folgenden werden lediglich die Unterschiede gegenüber dem Ausführungsbeispiel aus Fig. 1 beschrieben.

Bei dem Ausführungsbeispiel gemäß Fig. 2 ist der T-Stringer 9 mit seinen Fußabschnitten 12, 13 an einem Hautabschnitt 42 und der Ω-Stringer 10 mit seinen Fußabschnitten 15, 16 an einem Hautabschnitt 43 insbesondere mittels Nieten oder Klebstoff angebracht. Die Hautabschnitte 42 und 43 sind beispielsweise Bestandteil einer ersten und zweiten Rumpftonne, die jedoch nicht weiter dargestellt ist.

Die Hautabschnitte 42, 43 bilden einen mit gestrichelter Linie 44 gekennzeichneten Stoß. In Querrichtung 27 verläuft ein Gurt 45, welcher den Stoß 44 abdeckt, auf den Hautabschnitten 42, 43, das heißt, der Gurt 45 überbrückt den Stoß 44. Für 5 den Fall, dass die Hautabschnitte 42, 43 Bestandteil zweier Rumpftonnen sind, verläuft der Gurt 45 vorzugsweise in Umfangsrichtung der Rumpftonnen.

Bei dem Ausführungsbeispiel gemäß Fig. 2 ist der Spalt 22 derart breit ausgebildet - typischerweise mehrere Zentimeter -, dass der Gurt 45 zwischen dem T-Stringer 9 und dem Ω-Stringer durchgeführt werden kann. Die Abschnitte 33 und/oder 35 liegen dabei dann abschnittsweise auf dem Gurt 45 in einem Bereich 46 auf, in welchem sie mit dem Gurt 45 und 15 den Hautabschnitten 42, 43 verbunden, beispielsweise verklebt oder vernietet sind. Entsprechendes gilt für das Verbindungselement 4.

Die Beschnitte 36 und 37 sind bei dem Ausführungsbeispiel gemaß Fig. 2 gerundet ausgebildet.

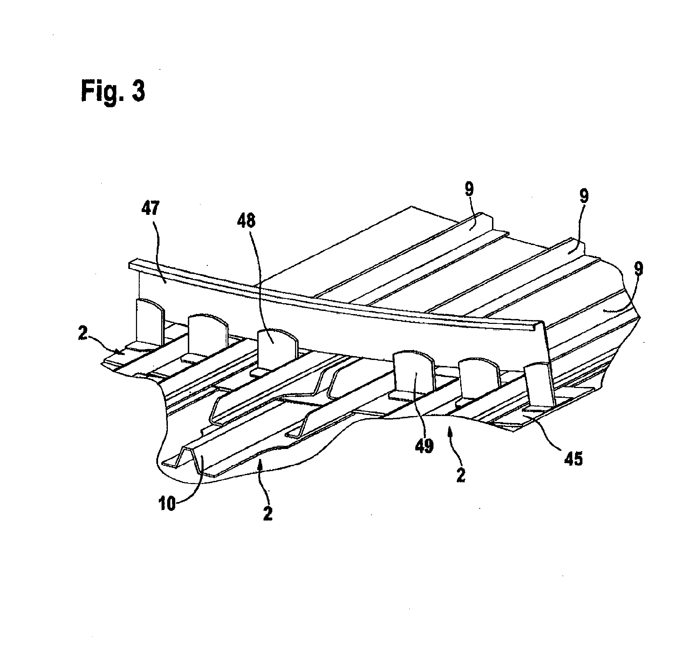

Im Unterschied zu dem Ausführungsbeispiel gemäß Fig. 2 ist bei dem Ausführungsbeispiel gemäß Fig. 3 weiterhin ein Spant 47 vorgesehen, welcher mittels Stützwinkeln (beispielhaft mit den Bezugszeichen 48 und 49 bezeichnet) mit dem Gurt 45 gekoppelt ist.

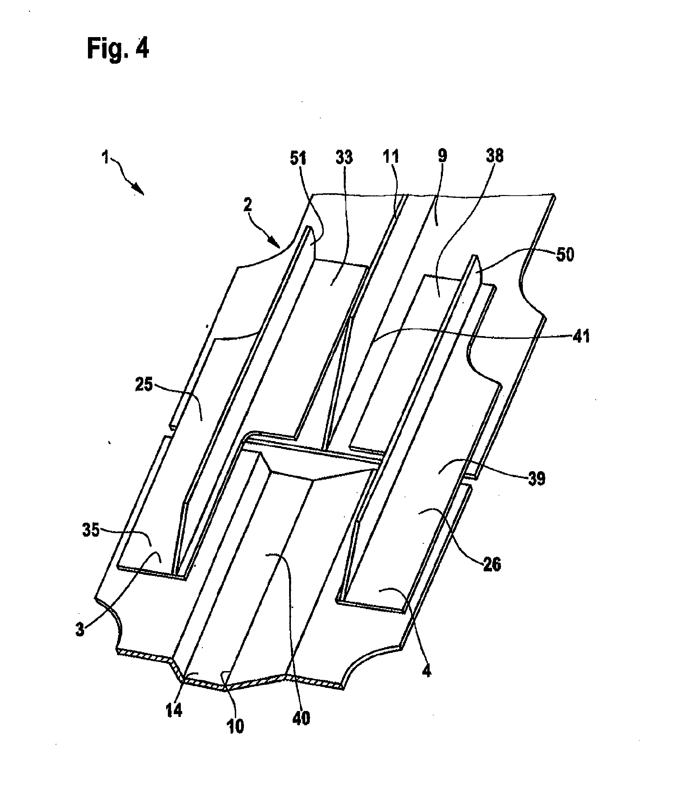

Fig. 4 zeigt in einer perspektivischen Ansicht einen Verbund 1 gemäß einem weiteren Ausführungsbeispiel der vorliegenden Erfindung.

Die Verbindungsanordnung 2 gemäß den Ausführungsbeispielen aus den Fig. 4 bis 6 unterscheidet sich von den Ausführungsbeispielen aus den Fig. 1 bis 3 wie folgt:

Wie in Fig. 4 illustriert, weisen die Verbindungselemente 3 und 4 jeweils anstelle der zwei Stegabschnitte 5, 6 beziehungsweise 7, 8 wie bei dem Ausführungsbeispiel gemäß Fig. 1, lediglich einen Stegabschnitt 50 beziehungsweise 51 auf. Der Steg 50 erstreckt sich entlang der Kante des Abschnitts 39, welche dem Kammabschnitt 14 zugewandt ist und im Wesentlichen 5 entlang der Kante des Abschnitts 38, welche von dem Steg 11 des T-Stringers 9 abgewandt ist. Der Steg 51 des Verbindungselements 3 ist entsprechend ausgebildet.

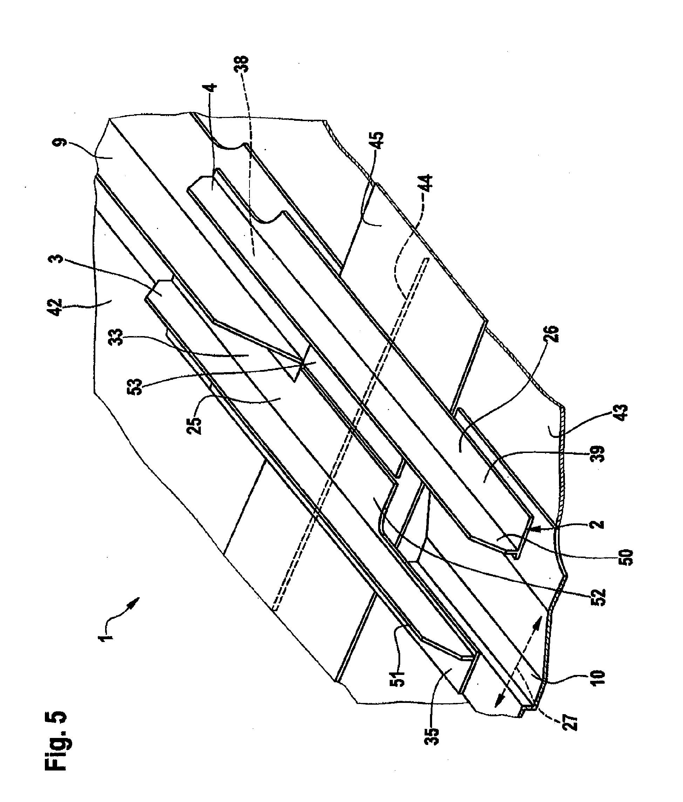

Fig. 5 zeigt in einer perspektivischen Ansicht ein weiteres Ausführungsbeispiel des erfindungsgemäßen Verbunds 1.

Die Verbindungsanordnung 2 verbindet zwei Hautabschnitte 42, 43 über einen Stoß 44 hinweg, wobei dieser mittels eines Gurts 45 abgedeckt ist, wie bereits im Zusammenhang mit dem Ausführungsbeispiel gemäß Fig. 2 beschrieben. Die Besonderheit bei dem Ausführungsbeispiel gemäß Fig. 5 ist nun, dass die Abschnitte 33 und 38 der Fußabschnitte 25 beziehungsweise 26 im Bereich des Gurts 45 sich in der Richtung 27 zueinander hin verbreitern. Diese verbreiterten Abschnitte sind mit den 20 Bezugszeichen 52 und 53 in Fig. 5 gekennzeichnet. Die verbreiterten Abschnitte 52 und 53 sind vorzugsweise jeweils mittels Nieten und/oder Klebstoff mit dem Gurt 45 verbunden. In einer Draufsicht, also senkrecht zu den Hautabschnitten 42, 43 gesehen, weist die Verbindungsanordnung 2 einen im Wesentlichen H-förmigen Umriss auf. Ein Querschnitt durch das Verbindungselement 3 oder 4 im Bereich des verbreiterten Abschnitts 52 beziehungsweise 53 stellt sich vorzugsweise im Wesentlichen T-förmig dar. Eine Ausführung der Verbindungselemente 3 und 4 als einstückiges Bauteil, wobei insbesondere die verbreiterten Abschnitte 52 und 53 miteinander verbunden sind, ist ebenfalls möglich.

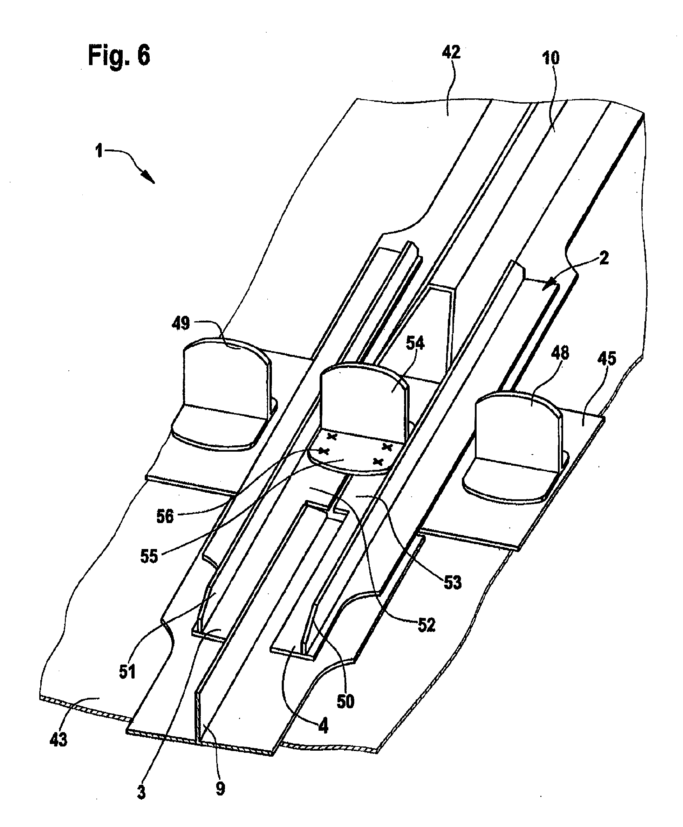

Fig. 6 zeigt das Ausführungsbeispiel aus Fig. 5, wobei Stützwinkel 48, 49 und 54 vorgesehen sind. Die Besonderheit dabei 35 ist, dass der Stützwinkel 54 zwischen den Stegabschnitten 50 und 51 des Verbindungselements 4 beziehungsweise 3 und mit seinem Fußabschnitt 55 auf den verbreiterten Abschnitten 52 und 53 aufsitzend angeordnet ist. Vorzugsweise ist der Fußabschnitt 55 des Stützwinkels 54 mittels Nieten und/oder Klebstoff mit den verbreiterten Abschnitten 52 und 53 der Verbindungselemente 4 beziehungsweise 3 verbunden. Ein Niet (beispielhaft mit dem Bezugszeichen 56 versehen) erstreckt sich durch den Fußabschnitt 55 des Stützwinkels 54, dann durch den verbreiterten Abschnitt 52 des Verbindungseiements 3, dann durch den Gurt 45 und hiernach durch den Hautabschnitt 43.

Die Stützwinkel 48, 49 und 54 sind jeweils mit einem nicht dargestellten Spant verbunden, welcher dem Spant 47 aus Fig. 3 entspricht.

Gemäß den vorliegenden Ausführungsbeispielen ist der gesamte Verbund 1 aus Faserverbundwerkstoff hergestellt. Selbstverständlich könnten jedoch auch einige der Komponenten, beispielsweise die Hautabschnitte 42 und 43, die Verbindungselemente 3, 4 oder der T- oder Ω-Stringer 9, 10 aus Metall gefertigt sein.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar.

Die vorliegende Erfindung schafft einen Verbund, insbesondere im Luft- und Raumfahrtbereich. Der Verbund weist einen T-Stringer, einen Ω-Stringer sowie eine Verbindungsanordnung auf. Die Verbindungsanordnung verbindet lediglich Fußabschnitte des T-Stringer und des Ω-Stringers miteinander. Somit wird eine Kopplung eines Ω-Stringers mit einem T-Stringer geschaffen, welche vergleichsweise unempfindlich gegenüber Toleranzen hinsichtlich der Ausrichtung des Ω-Stringers bezüglich des T-Stringers ist.

### Bezugszeichenliste

- 1: Verbund
- 2: Verbindungsanordnung
- 3: Verbindungselement
- 4: verbindungselement
- 5: Stegabschnitt
- 6: Stegabschnitt
- 7: Stegabschnitt
- 8: Stegabschnitt
- 9: T-Stringer
- 10: Ω-Stringer
- 11: Stegabschnitt
- 12: Fußabschnitt
- 13: Fußabschnitt
- 14: Kammabschnitt
- 15: Fußabschnitt
- 16: Fußabschnitt
- 17: Hautabschnitt
- 18: Längsrichtung
- 19: Längsrichtung
- 20: Ende
- 21: Ende
- 22: Spalt
- 23: Schräge
- 24: Schräge
- 25: Fußabschnitt
- 26: Fußabschnitt
- 27: Querrichtung
- 28: Überlappungsabschnitt
- 29: Kante
- 30: Kante
- 31: Kante
- 32: Kante
- 33: Abschnitt
- 34: Linie
- 35: Abschnitt
- 36: Beschnitt
- 37A: Abschrägung
- 37B: Abschrägung
- 37C: Abschrägung
- 37D: Abschrägung
- 37E: Abschrägung
- 37F: Abschrägung
- 37G: Abschrägung
- 37H: Abschrägung
- 38: Abschnitt
- 39: Abschnitt
- 40: Aufnahmebereich
- 41: Aufnahmebereich
- 42: Hautabschnitt
- 43: Hautabschnitt
- 44: Stoß
- 45: Gurt
- 46: Bereich
- 47: Band
- 48: Stützwinkel
- 49: Stützwinkel
- 50: Stegabschnitt
- 51: Stegabschnitt
- 52: verbreiterter Abschnitt
- 53: verbreiterter Abschnitt
- 54: Stützwinkel
- 55: Fußabschnitt

## Patentansprüche

1. Verbund (1), insbesondere im Luft- und Raumfahrtbereich, mit:
einem T-Stringer (9), welcher einen Stegabschnitt (11) sowie zwei Fußabschnitte (12, 13) aufweist, die sich winklig an ein Ende des Stegabschnitts (11) anschließen und in etwa entgegengesetzt zueinander ausgerichtet sind;
einem Ω-Stringer (10), welcher einen Kammabschnitt (14) sowie zwei Fußabschnitte (15, 16) aufweist, die sich an gegenüberliegende Enden des Kammabschnitts (14) anschließen und im Wesentlichen entgegengesetzt zueinander ausgerichtet sind;
einer Verbindungsanordnung (2), welche die Fußabschnitte (12, 13; 15, 16) des T-Stringers (9) und des Q-Stringers (10) miteinander verbindet; und
einem Stützwinkel (48, 49, 54), insbesondere zur Verbindung eines Spants (47) mit dem Q- und dem T-Stringer (10; 9), der mit den sich verbreiternden Fußabschnitten (52; 53) des ersten und zweiten Verbindungselements (3; 4) verbunden ist
wobei die Verbindungsanordnung (2) den T-Stringer (9) und den Q-Stringer (10) in Längsrichtung (18; 19) derselben miteinander verbindet, einen Fußabschnitt (25, 26), welcher die Fußabschnitte (12, 13; 15, 16) des T-Stringers (9) und des Q-Stringers (10) miteinander verbindet, und einen Stegabschnitt (5, 6, 7, 8; 50, 51) aufweist, welcher im Wesentlichen senkrecht zu dem Fußabschnitt (25, 26) ausgerichtet ist,
wobei der Stegabschnitt (5, 6, 7, 8; 50, 51) der Verbindungsanordnung (2) an seinem einen Ende oder an seinen beiden Enden Abschrägungen (37a, 37b, 37c, 37d, 37e, 37f, 37g, 37h) aufweist, welche zu den Fußabschnitten (12, 13; 25, 26) des T-Stringers (9) beziehungsweise Ω-Stringers (10) hin auslaufen und die Abschrägung (37a, 37b, 37c, 37d, 37e, 37f, 37g, 37h) mit dem Fußabschnitt (12, 13; 15, 16) einen Winkel von 15 bis 45° bildet,
wobei der Fußabschnitt (25, 26) der Verbindungsanordnung (2) einen ersten Beschnitt (37), welcher hin zu dem Stegabschnitt (11) des T-Stringers (9) ausläuft und/oder einen zweiten Beschnitt (36) aufweist, welcher von dem Stegabschnitt (11) des T-Stringers (9) weg gerichtet ist,
wobei die Verbindungsanordnung (2) ein erstes Verbindungselement (3) und ein zweites Verbindungselement (4) aufweist, wobei das erste Verbindungselement (3) einen ersten Fußabschnitt (13) des T-Stringers (9) mit einem ersten Fußabschnitt (16) des Q-Stringers (10) und das zweite Verbindungselement (4) einen zweiten Fußabschnitt (12) des T-Stringers (9) mit einem zweiten Fußabschnitt (15) des Ω-Stringers (10) verbindet,
wobei das erste und zweite Verbindungselement (3; 4) zusammen einen im Wesentlichen H-förmigen Umriss aufweisen, und
wobei der T-Stringer (9) mit einem ersten Hautabschnitt (42) und der Q -Stringer (10) mit einem zweiten Hautabschnitt (43) verbunden ist, wobei die Verbindungsanordnung (2) den ersten und zweiten Hautabschnitt (42; 43) überbrückt, wobei das erste und zweite Verbindungselement (3; 4) in einem Überbrückungsbereich (45) jeweils einen sich zueinander hin verbreiternden Fußabschnitt (52; 53) aufweisen, welche jeweils mit einem den ersten und zweiten Hautabschnitt (42; 43) überbrückenden Gurt (45) verbunden sind.

2. Verbund nach Anspruch 1, **dadurch gekennzeichnet, dass** das erste und/oder zweite Verbindungselement (3; 4) wenigstens abschnittsweise einen U-förmigen und/oder T-förmigen Querschnitt aufweisen.

3. Verbund nach Anspruch 1 oder 2, **dadurch gekennzeichnet, dass** das erste und zweite Verbindungselement (3; 4) einen ersten Aufnahmebereich (40) bilden, in welchem sie den Kammabschnitt (14) des Q-Stringers (10) zwischen sich aufnehmen, und/oder einen zweiten Aufnahmebereich (41) ausbilden, in welchem sie den Stegabschnitt (11) des T-Stringers (9) zwischen sich aufnehmen.

4. Verbund nach Anspruch 3, **dadurch gekennzeichnet, dass** der erste Aufnahmebereich (40) einen ersten Stegabschnitt (5, 8) und der zweite Aufnahmeabschnitt (41) einen zweiten Stegabschnitt (6, 7) aufweist, wobei sich der erste und zweite Stegabschnitt (5, 8; 6, 7) wenigstens abschnittsweise überlappen.

5. Verbund nach wenigstens einem der Ansprüche 1 bis 4, **dadurch gekennzeichnet, dass** der T-Stringer (9) mit einem ersten Hautabschnitt (42) und der Ω-Stringer (10) mit einem zweiten Hautabschnitt (43) verbunden ist, wobei die Verbindungsanordnung (2) den ersten und zweiten Hautabschnitt (42; 43) überbrückt, wobei das erste und zweite Verbindungselement (3; 4) in einem Überbrückungsbereich (45) jeweils einen sich zueinander hin verbreiternden Fußabschnitt (52; 53) aufweisen, welche jeweils mit einem den ersten und zweiten Hautabschnitt (42; 43) überbrückenden Gurt (45) verbunden sind.

6. Luft- oder Raumfahrzeug, mit wenigstens einem Verbund (1) nach wenigstens einem der vorhergehenden Ansprüche.

7. Luft- oder Raumfahrzeug nach Anspruch 6, **dadurch gekennzeichnet, dass**
der erste Hautabschnitt (42) als eine erste Rumpfsektion und/oder der zweite Hautabschnitt (43) als eine zweite Rumpfsektion ausgebildet ist.

## Claims

1. Interconnection (1), in particular in the aerospace sector, comprising:
- a T-stringer (9) which has a web portion (11) and two foot portions (12, 13) which are connected at an angle to one end of the web portion (11) and are aligned approximately opposite one another;
- an Ω-stringer (10) which has a comb portion (14) and two foot portions (15, 16) which are connected to opposite ends of the comb portion (14) and are aligned substantially opposite one another;
- a connection arrangement (2) which joins together the foot portions (12, 13; 15, 16) of the T-stringer (9) and of the Ω-stringer (10); and
- an angle bracket (48, 49, 54), in particular for connecting a former (47) to the Ω-stringer and the T-stringer (10; 9), which is connected to the widening foot portions (52; 53) of the first and second connection elements (3; 4),
wherein the connection arrangement (2) joins together the T-stringer (9) and the Ω-stringer (10) in the longitudinal direction (18; 19) thereof, has a foot portion (25, 26), which joins together the foot portions (12, 13; 15, 16) of the T-stringer (9) and of the Ω-stringer (10), and has a web portion (5, 6, 7, 8; 50, 51) which is aligned substantially perpendicular to the foot portion (25, 26),
wherein the web portion (5, 6, 7, 8; 50, 51) of the connection arrangement (2) has at one of its ends or at both of its ends bevels (37a, 37b, 37c, 37d, 37e, 37f, 37g, 37h) which taper off towards the foot portions (12, 13; 25, 26) of the T-stringer (9) and of the Ω-stringer (10) and the bevel (37a, 37b, 37c, 37d, 37e, 37f, 37g, 37h) forms together with the foot portion (12, 13; 25, 26) an angle of 15 to 45°,
wherein the foot portion (25, 26) of the connection arrangement (2) has a first cut (37), which taper off towards the web portion (11) of the T-stringer (9), and/or has a second cut (36) which is directed away from the web portion (11) of the T-stringer (9),
wherein the connection arrangement (2) has a first connection element (3) and a second connection element (4), wherein the first connection element (3) connects a first foot portion (13) of the T-stringer (9) to a first foot portion (16) of the Ω-stringer (10) and the second connection element (4) connects a second foot portion (12) of the T-stringer (9) to a second foot portion (15) of the Ω-stringer (10),
wherein the first and second connection elements (3; 4) together have a substantially H-shaped contour, and wherein the T-stringer (9) is connected to a first skin portion (42) and the Ω-stringer (10) is connected to a second skin portion (43), wherein the connection arrangement (2) bridges the first and second skin portions (42; 43), wherein the first and second connection elements (3; 4) each have in a bridging region (45) a foot portion (52; 53), which foot portions widen one towards the other and are each connected to a band (45) which bridges the first and second skin portions (42; 43).

2. Interconnection as claimed in claim 1, **characterised in that** the first and/or second connection element (3; 4) has/have a U-shaped and/or a T-shaped cross section at least in portions.

3. Interconnection as claimed in claim 1 or 2, **characterised in that** the first and second connection elements (3; 4) form a first receiving region (40), in which they receive the comb portion (14) of the Ω-stringer (10) therebetween, and/or form a second receiving region (41), in which they receive the web portion (11) of the T-stringer (9) therebetween.

4. Interconnection as claimed in claim 3, **characterised in that** the first receiving region (40) has a first web portion (5, 8) and the second receiving portion (41) has a second web portion (6, 7), wherein the first and second web portions (5, 8; 6, 7) overlap at least in portions.

5. Interconnection as claimed in at least one of claims 1 to 4, **characterised in that** the T-stringer (9) is connected to a first skin portion (42) and the Ω-stringer (10) is connected to a second skin portion (43), wherein the connection arrangement (2) bridges the first and second skin portions (42; 43), wherein the first and second connection elements (3; 4) each have in a bridging region (45) a foot portion (52; 53), which foot portions widen one towards the other and are each connected to a band (45) which bridges the first and second skin portions (42; 43).

6. Aircraft or spacecraft, comprising at least one interconnection (1) as claimed in at least one of the preceding claims.

7. Aircraft or spacecraft as claimed in claim 6, **characterised in that** the first skin portion (42) is configured as a first fuselage section and/or the second skin portion (43) is configured as a second fuselage section.

## Revendications

1. Interconnexion (1), en particulier dans le domaine aérospatial, comportant :
- une lisse en T (9) qui présente un segment de traverse (11) ainsi que deux segments inférieurs (12, 13) qui se raccordent angulairement à une extrémité du segment de traverse (11) et sont orientés de manière sensiblement opposée l'un par rapport à l'autre ;
- une lisse Ω (10) qui présente un segment supérieur (14) ainsi que deux segments inférieurs (15, 16) qui se raccordent aux extrémités opposées du segment supérieur (14) et sont orientés de manière sensiblement opposée l'un par rapport à l'autre ;
- un système de liaison (2) qui relie les segments inférieurs (12, 13 ; 15, 16) de la lisse en T (9) et de la lisse Ω (10) les uns aux autres ; et
- une équerre de support (48, 49, 54), en particulier pour relier un cadre (47) à la lisse Ω et la lisse en T (10 ; 9), laquelle est reliée aux segments inférieurs (52 ; 53) du premier et du segment élément de liaison (3 ; 4), lesquels segments inférieurs s'élargissant,
dans laquelle le système de liaison (2) relie la lisse en T (9) et la lisse Ω (10) l'une à l'autre dans la direction longitudinale (18 ; 19) de celles-ci, et présente un segment inférieur (25, 26) qui relie les segments inférieurs (12, 13 ; 15, 16) de la lisse en T (9) et de la lisse Ω (10) les uns aux autres, et présente un segment de traverse (5, 6, 7, 8 ; 50, 51) qui est orienté sensiblement perpendiculairement au segment inférieur (25, 26),
dans laquelle le segment de traverse (5, 6, 7, 8 ; 50, 51) du système de liaison (2) présente à une de ses extrémités ou à ses deux extrémités des chanfreins (37a, 37b, 37c, 37d, 37e, 37f, 37g, 37h) qui débouchent vers les segments inférieurs (12, 13 ; 25, 26) de la lisse en T (9) respectivement de la lisse Ω (10) et le chanfrein (37a, 37b, 37c, 37d, 37e, 37f, 37g, 37h) forme un angle de 15 à 45° avec le segment inférieur (12, 13 ; 15, 16), dans laquelle le segment inférieur (25, 26) du système de liaison (2) présente une première saignée (37) qui débouche vers le segment de traverse (11) de la lisse en T (9) et/ou une seconde saignée (36) qui part du segment de traverse (11) de la lisse en T (9),
dans laquelle le système de liaison (2) présente un premier élément de liaison (3) et un second élément de liaison (4), le premier élément de liaison (3) reliant un premier segment inférieur (13) de la lisse en T (9) à un premier segment inférieur (16) de la lisse Ω (10) et le second élément de liaison (4) reliant un second segment inférieur (12) de la lisse en T (9) à un second segment inférieur (15) de la lisse Ω (10),
dans laquelle les premier et second éléments de liaison (3 ; 4) présentent ensemble un contour sensiblement en forme de H, et
dans laquelle la lisse en T (9) est reliée à un premier panneau (42) et la lisse Ω (10) à un second panneau (43), le système de liaison (2) pontant les premier et second panneaux (42 ; 43), les premier et second éléments de liaison (3 ; 4) présentant chacun un segment inférieur (52 ; 53) qui s'élargit par rapport à l'autre dans une zone de pontage (45), chacun étant relié à une courroie (45) pontant les premier et second panneaux (42 ; 43).

2. Interconnexion selon la revendication 1, **caractérisée en ce que** le premier et/ou second élément de liaison (3 ; 4) présente(nt) au moins par endroits une section en forme de U et/ou en forme de T.

3. Interconnexion selon la revendication 1 ou 2, **caractérisée en ce que** les premier et second éléments de liaison (3 ; 4) forment une première zone de réception (40) dans laquelle ils reçoivent entre eux le segment supérieur (14) de la lisse Ω (10), et/ou une seconde zone de réception (41) dans laquelle ils reçoivent entre eux le segment de traverse (11) de la lisse en T (9).

4. Interconnexion selon la revendication 3, **caractérisée en ce que** la première zone de réception (40) présente un premier segment de traverse (5, 8) et la seconde partie de réception (41) un second segment de traverse (6, 7), les premier et second segments de traverse (5, 8 ; 6, 7) se chevauchant au moins par endroits.

5. Interconnexion selon au moins une des revendications 1 à 4, **caractérisée en ce que** la lisse en T (9) est reliée à un premier panneau (42) et la lisse Ω (10) à un second panneau (43), le système de liaison (2) pontant les premier et second panneaux (42 ; 43), les premier et second éléments de liaison (3 ; 4) présentant chacun un segment inférieur (52 ; 53) qui s'élargit par rapport à l'autre dans une zone de pontage (45), chacun étant relié à une courroie (45) pontant les premier et second panneaux (42 ; 43).

6. Aéronef ou véhicule spatial, comportant au moins une interconnexion (1) selon au moins une des revendications précédentes.

7. Aéronef ou véhicule spatial selon la revendication 6, **caractérisé en ce que**
le premier panneau (42) est réalisé sous la forme d'une section de fuselage et/ou le second panneau (43) sous la forme d'une seconde section de fuselage.
